**Europäisches Patentamt**

**European Patent Office**

**Office européen des brevets**

(11) Veröffentlichungsnummer: **0 208 827**

**B1**

(12) **EUROPÄISCHE PATENTSCHRIFT**

(45) Veröffentlichungstag der Patentschrift: **06.06.90**

(51) Int. Cl.⁵: **B 25 J 15/02**

(21) Anmeldenummer: **86100720.1**

(22) Anmeldetag: **21.01.86**

(54) **Greifvorrichtung.**

(30) Priorität: **10.07.85 DE 3524578**

(43) Veröffentlichungstag der Anmeldung:
**21.01.87 Patentblatt 87/04**

(45) Bekanntmachung des Hinweises auf die
Patenterteilung:
**06.06.90 Patentblatt 90/23**

(84) Benannte Vertragsstaaten:
**CH DE FR GB IT LI**

(56) Entgegenhaltungen:
**DE-U-8 423 316
FR-A-1 181 485
FR-A-2 454 878
FR-A-2 505 239
GB-A-2 024 770
US-A-3 051 327
US-A-3 312 496
US-A-3 370 213
US-A-3 765 545
US-A-4 036 374
US-A-4 522 439**

(73) Patentinhaber: **ROBERT BOSCH GMBH
Postfach 50
D-7000 Stuttgart 1 (DE)**

(72) Erfinder: **Gosdowski, Gerhard
Camberlegstrasse 83
D-7120 Bietigheim-Bissingen (DE)**
Erfinder: **Jenner, Martin, Dipl.-Ing. (FH)
Trompetergässle 13
D-7140 Ludwigsburg (DE)**
Erfinder: **Konold, Peter, Dipl.-Ing.
Esslinger Strasse 12
D-7146 Tamm (DE)**
Erfinder: **Steegmüller, Helmut
Im Vogelsang 15
D-7151 Affalterbach (DE)**

## Beschreibung

### Stand der Technik

Die Erfindung geht aus von einer Greifvorrichtung mit einem Greifergrundkörper und einem mit diesem fest verbundenen pneumatischen Antriebsmechanismus, der einen axial verschiebbar gelagerten Kolben hat, der zwischen seinen beiden starren Enden mit mindestens einer Ausnehmung in seinem Mantelumfang versehen ist, in welche die einen Enden von am Greifergrundkörper schwenkbar gelagerten Winkelhebeln eingreifen, die mit ihren anderen Enden, die je in einer die Symmetrieachse des Antriebsmechanismus aufnehmenden Ebene schwenkbar sind, an Greiferbacken angreifen, denen Führungsmittel zugeordnet sind, welche bei einem durch die Winkelhebel hervorgerufenen Verschieben der Greiferbacken quer zur Symmetrieachse ein Kippen der Greiferbacken verhindern.

Bei einer bekannten Greifvorrichtung dieser Gattung (US—A—3 312 496) sind die Winkelhebel über Drehgelenke mit den Greiferbacken verbunden und die den Greiferbacken zugeordneten Führungsmittel bestehen aus Laschen, die einerseits mit der Greiferbacke und andererseits mit dem Greifergrundkörper jeweils über ein Drehgelenk verbunden sind. Dadurch wird ein Kippen der Greiferbacken vermieden und ein Parallelverschieben sichergestellt. Jedoch erfolgt die Parallelverschiebung der Greiferbacken entlang kreisbogenförmiger Bahnen, so daß sie außer ihrer eigentlichen Spannbewegung auch eine parallel zur Stellgliedachse gerichtete Bewegungskomponente ausführen, was in manchen Fällen unerwünscht oder nachteilig sein kann. Außerdem ergibt sich durch die Vielzahl der Drehgelenke am Greifergrundkörper und an den Greiferbacken ein verhältnismäßig großes Führungsspiel der Greiferbacken, welches sich durch Verschleiß der Drehgelenke insbesondere bei hohen Beanspruchungen noch erhöht. Ferner sind bei der bekannten Vorrichtung keine Mittel zum Einstellen der Öffnungs- und Schließstellung der Greiferbacken vorgesehen.

### Vorteile der Erfindung

Die erfindungsgemäße Anordnung mit den Merkmalen des Hauptanspruchs hat demgegenüber den Vorteil, daß die Greiferbacken exakt geradlinig in Öffnungs- und Schließrichtung bewegt werden und daß die Führungsflächen an den Greiferbacken und den Führungsleisten wesentlich größer ausgebildet werden können als Lagerflächen an Drehgelenken, so daß sich eine verschleißarme und auch für höhere Beanspruchungen gut geeignete Ausführung ergibt. Außerdem ist erreicht, daß die Greiferkraft über einen verhältnismäßig großen Greifbereich hinweg gleichbleibend groß ist und daß die Öffnungs- und Schließstellung der Greiferbacken eingestellt bzw. verstellt werden kann, so daß für den Anwender insbesondere in kritischen Einsatzfällen, z.B. bei begrenzten Freiräumen, Sonderlösungen von Greiferbacken mit eigenen, angepaßten Wegbegrenzungsschultern entfallen und eine Umrüstung auf andere Greiferwege einfach und schnell möglich ist.

Durch die in den Unteransprüchen aufgeführten Maßnahmen sind vorteilhafte Weiterbildungen der Anordnung nach dem Hauptanspruch möglich.

Eine kompakte, keinen zusätzlichen Raum beanspruchende und von außen leicht verstellbare Anordnung ergibt sich, wenn der axial verstellbare Anschlag durch eine mit einer Gewindebohrung versehene Buchse gebildet ist, welche unverdrehbar, jedoch verschiebbar in dem den Zylinderraum abschließenden Teil bzw. in einem mit diesem Teil verbunden Kunststoffkörper gelagert ist, und wenn zum axialen Verstellen der Buchse eine in deren Gewindebohrung eingreifende Schraube dient, die ihrerseits axial unverschiebbar an dem den Zylinderraum abschließenden Teil gehalten ist.

Zur Sicherung der eingestellten Lage des Anschlags wird weiter vorgeschlagen, daß die Schraube einen mit Rastnuten am Umfang versehenen Ringbund hat bzw. mit einem derartigen Ringbund verbunden ist, und daß in dem den Zylinderraum abschließenden Teil bzw. in einem mit diesem Teil verbundenen Kunststoffkörper ein Rastglied radial verschiebbar gelagert ist, welches durch eine Feder gegen den Ringbund gedrückt ist.

Der Gegenstand des Hauptanspruchs ist bis auf die Mittel zum Einstellen der Öffnungs- und Schließstellung der Greiferbacken bereits in der nicht vorveröffentlichten EP-A-0 170 103 enthalten, welche unter Artikel 54 (3) EPÜ fällt und deshalb für die Frage der erfinderischen Tätigkeit nicht von Bedeutung ist.

### Zeichnung

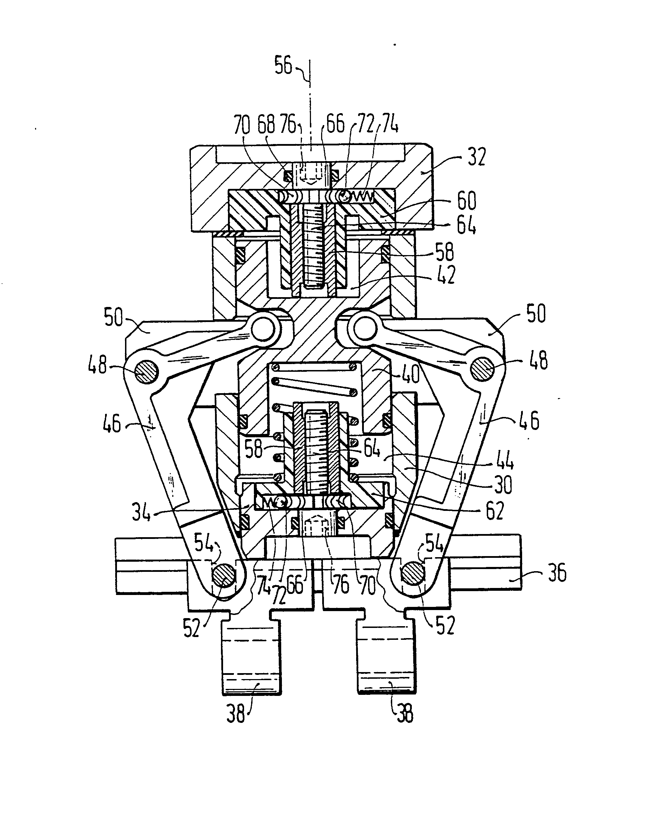

Ein Ausführungsbeispiel der Erfindung ist in der Zeichnung dargestellt und in der nachfolgenden Beschreibung näher erläutert. Die einzige Figur der Zeichnung zeigt einen Längsschnitt durch das Ausführungsbeispiel.

### Beschreibung des Ausführungsbeispieles

Die dargestellte Greifvorrichtung hat ein den Greifergrundkörper bildendes Gehäuse 30, welches oben durch einen Deckel 32 und unten durch einen Einsatzkörper 34 nach außen dicht abgeschlossen ist. Der Deckel 32 ist mit im einzelnen nicht dargestellten Mitteln zum Befestigen am Gehäuse 30 und zum Anbauen der Vorrichtung an einen Manipulator, ein Maschinengestell oder dergleichen versehen. Der Einsatzkörper 34 ist mit zwei parallel nebeneinander laufenden Führungsleisten 36 verbunden, auf denen zwei Greiferbacken 38 linear verschiebbar gelagert sind.

Im Gehäuse 30 ist ein einstückig ausgeführter Kolben 40 verschiebbar gelagert, der zwischen sich und dem Deckel 32 einen ersten Zylinderraum 42 und zwischen sich und dem Einsatzkörper 34 einen zweiten Zylinderraum 44 begrenzt. Am Kolben 40 sind die einen in eine Ausnehmung 41 im Mantel des Kolbens 40 eingreifenden Hebelarme von zwei sich diametral gegenüberliegenden Winkelhebeln 46 angelenkt, von denen jeder auf einem Bolzen 48 gelagert ist, der an einer seitlich abstehenden Konsole 50 des Gehäuses 30 befestigt ist. Die anderen Hebelarme der Winkelhebel 46 greifen je mit einem Zapfen 52 in einen Schlitz 54 einer Greiferbacke 38 ein, welcher parallel zur Symmetrieachse 56 der Vorrichtung verläuft.

Die beiden Zylinderräume 42, 44 sind je über eine nicht dargestellte Leitung mit einer Steuereinrichtung verbunden, welche die Zylinderräume 42, 44 alternativ mit einer Druckmittelquelle und der Atmosphäre verbindet. In jedem Zylinderraum 42, 44 ist ein axial verstellbarer Anschlag für den Kolben 40 gebildet, mit welchen der Kolbenweg nach beiden Seiten hin begrenzt bzw. eingestellt werden kann. Jeder Anschlag hat eine mit einer Gewindebohrung versehene Buchse 58, die unverdrehbar, jedoch axial verschiebbar in einem Kunststoffkörper 60 bzw. 62 gelagert ist, der seinerseits in einer Ausnehmung im Deckel 32 bzw. im Einsatzkörper 34 befestigt ist.

In die Gewindebohrung einer jeden Buchse 58 greift eine Schraube 64 ein, deren Kopf 66 im Deckel 32 bzw. im Einsatzkörper 34 drehbar gelagert und durch einen Dichtring 68 abgedichtet ist. An jeder Schraube 64 ist unmittelbar neben dem Kopf 66 ein im Durchmesser größerer Ringbund 70 befestigt bzw. gebildet, der am Umfang mit gleichmäßig verteilten Rastnuten versehen ist. Der Ringbund 70 ist zwischen Deckel 32 bzw. Einsatzkörper 34 und Kunststoffkörper 60 bzw. 62 gefangen, wodurch die Schraube 64 axial unverschiebbar am Deckel 32 bzw. dem Einsatzkörper 34 gehalten ist.

Jeder Kunststoffkörper 60, 62 ist mit einer radial verlaufenden Randvertiefung versehen, in welcher eine Rastkugel 72 und eine Rastfeder 74 angeordnet und durch die benachbarte Stirnseite des anliegenden Deckels 32 bzw. des Einsatzkörpers 34 unverschiebbar gehalten sind. Die Rastfedern 74 drücken die Rastkugeln 72 je in eine der Rastnuten am Umfang der Ringbunde 70 ein und halten die Schrauben 64 in der eingestellten Lage schüttelsicher fest. Zum Verdrehen der Schrauben mittels eines Steckschlüssels ist jeder Kopf 66 mit einer entsprechend geformten Vertiefung 76 versehen.

Der Kolben 40 bildet mit den Zylinderräumen 42, 44 und den Mitteln zum Erzeugen und gesteuerten Zuführen von Druckluft zu den Zylinderräumen 42, 44 bzw. Entlüften der Zylinderräume einen pneumatischen Antriebsmechanismus, der in den Greifergrundkörper integriert ist. Im Betrieb der Vorrichtung verschiebt der Kolben 40 über die Winkelhebel 46 die Greiferbacken 38, wodurch die gewünschten Spann- und Lösevorgänge hervorgerufen werden. Durch Verdrehen der Schrauben 64 können sowohl die engste als auch die weiteste Öffnung der Greiferbacken 38 eingestellt und die Greiferwege auf veränderte Verhältnisse leicht umgerüstet werden. Die Mittel zum Einstellen bzw. zum Verstellen dieser Größen sind so in die Vorrichtung integriert, daß sich eine kompakte, keinen zusätzlichen Platz benötigte Ausführung ergibt.

## Patentansprüche

1. Greifvorrichtung mit einem Greifergrundkörper (1) und einem mit diesem fest verbundenen pneumatischen Antriebsmechanismus, der einen axial verschiebbar gelagerten Kolben (40) hat, der zwischen seinen beiden Stirnenden mit mindestens einer Ausnehmung (41) in seinem Mantelumfang versehen ist, in welche die Enden von am Greifergrundkörper (1) schwenkbar gelagerten Winkelhebeln (46) eingreifen, die mit ihren anderen Enden, die je in einer die Symmetrieachse (56) des Antriebsmechanismus aufnehmenden Ebene schwenkbar sind, an Greiferbacken (38) angreifen, denen Führungsmittel zugeordnet sind, welche bei einem durch die Winkelhebel (46) hervorgerufenen Verschieben der Greiferbacken (38) quer zur Symmetrieachse (56) ein Kippen der Greiferbacken (38) verhindern, wobei die Führungsmittel durch gestellfeste, mindestens annähernd im rechten Winkel zur Symmetrieachse (56) angeordnete Geradführungen (Führungsleisten 36) gebildet sind, auf denen die Greiferbacken (38) verschiebbar gelagert sind, die mit zur Symmetrieachse (56) mindestens annähernd parallelen Ausnehmungen (54) versehen sind, in welche die Winkelhebel (46) im wesentlichen spielfrei eingreifen, und ferner mit die Zylinderräume (42, 44) des pneumatischen Antriebsmechanismus axial abschließenden Teilen (32, 34), an denen je ein axial verstellbarer Anschlag (58) für den Kolben (40) vorgesehen ist.

2. Vorrichtung nach Anspruch 1, dadurch gekennzeichnet, daß jeder axial verstellbare Anschlag durch eine mit einer Gewindebohrung versehene Buchse (58) gebildet ist, welche unverdrehbar, jedoch verschiebbar in dem den Zylinderraum (42, 44) abschließenden Teil (32, 34) bzw. in einem mit diesem Teil (32, 34) verbundenen Kunststoffkörper (60, 62) gelagert ist, und daß zum axialen Verstellen der Buchse (58) eine in deren Gewindebohrung eingreifende Schraube (64) vorgesehen ist, die ihrerseits axial unverschiebbar an dem den Zylinderraum (42, 44) abschließenden Teil (32, 34) gehalten ist.

3. Vorrichtung nach Anspruch 2, dadurch gekennzeichnet, daß die Schraube (64) einen mit Rastnuten am Umfang versehenen Ringbund (70) hat bzw. mit einem derartigen Ringbund verbunden ist, und daß in dem den Zylinderraum (42, 44) abschließenden Teil (32, 34) bzw. in einem mit diesem Teil (32, 34) verbundenen Kunststoffkörper (60, 62) ein Rastglied (72) radial verschiebbar gelagert ist, welches durch eine Feder (74) gegen den Ringbund (70) gedrückt ist.

## Revendications

1. Pince comprenant un corps principal de pince (1) et un mécanisme pneumatique de commande en liaison rigide avec celui-ci, comprenant un piston (40) pouvant se déplacer axialement, qui est muni entre ses deux extrémités frontales d'au moins un évidement sur sa périphérie enveloppe, dans lequel s'enclenchent les extrémités des leviers coudés (46) avec possibilité de pivoter dans le corps principal de pince (1), leviers qui avec leurs autres extrémités, pouvant pivoter dans un plan recevant l'axe de symétrie (56) du mécanisme de commande, agissent sur les mâchoires de la pince (38) auxquelles sont appliqués des moyens de guidage, qui empêchent le basculement des mâchoires de la pince, lors du déplacement des mâchoires de la pince (38) perpendiculairement à l'axe de symétrie (56), provoquée par les leviers coudés (46), les moyens de guidage étant constitués par des glissières (barres de guidage 36) fixes, placées au moins approximativement à angle droit par rapport à l'axe de symétrie (56), sur lesquelles sont logées, avec possibilité de déplacement, les mâchoires de la pince (38), qui sont munies d'évidements (54) au moins approximativement parallèles à l'axe de symétrie (56), dans lesquels engrènent les leviers coudés (46), essentiellement sans jeu et en outre avec des pièces (32, 34) obturant les espaces cylindriques (42, 44) du mécanisme de commande pneumatique, pièces sur chacune desquelles est prévue une butée (58) réglable axialement pour le piston (40).

2. Dispositif selon la revendication 1, caractérisé en ce que chaque butée réglable axialement est constituée par un manchon (58) pourvu d'un alésage fileté, qui est logé, sans pouvoir pivoter, mais pouvant être déplacé, dans la pièce (32, 34) obturant l'espace cylindrique (42, 44) ou dans un élément en matière plastique (60, 62) lié à cette pièce (32, 34), et en ce qu'on a prévu pour le réglage axial du manchon (58) une vis (64) engagée dans l'alésage fileté de celui-ci, qui ne peut être déplacé axialement et est maintenu dans la pièce (32, 34) obturant l'espace cylindrique (42, 44).

3. Dispositif selon la revendication 2, caractérisé en ce que la vis (64) a un collet annulaire (64) muni de rainures d'arrêt sur son pourtour ou bien est liée à un collet annulaire de ce type, et en ce que dans la pièce (32, 34) obturant l'espace cylindrique (42, 44) ou dans un élément en matière plastique (60, 62) lié à cette pièce (32, 34) une pièce de blocage (72) est logée sans pouvoir être déplacée, pièce qui est pressée par un ressort (74) contre le collet annulaire (70).

## Claims

1. Gripper having a basic gripper body (1) and a pneumatic drive mechanism which is attached firmly to the latter and has a piston (40) which is mounted so as to be axially displaceable and is provided between its two ends with at least one recess (41) in its casing circumference, into which recess there engage the ends of bell crank levers (46) which are mounted pivotably on the basic gripper body (1) and, with their other ends, each of which is pivotable in a plane containing the axis of symmetry (56) of the drive mechanism, engage on gripper jaws (38), to which are allocated guide means which, in the event of a displacement of the gripper jaws (38) transversely to the axis of symmetry (56) brought about by the bell-crank levers (46), prevent a tilting of the gripper jaws (38), the guide means being formed by straight-line guides (guide strips 36) which are fixed to the frame, are arranged at least approximately at right angles to the axis of symmetry (56) and on which the gripper jaws (38) are displaceably mounted, which are provided with recesses (54) at least approximately parallel to the axis of symmetry (56), in which recesses the bell-crank levers (46) engage essentially without play, and furthermore having parts (32, 34) which seal the cylinder spaces (42, 44) of the pneumatic drive mechanism axially and on each of which is provided an axially adjustable stop (58) for the piston (40).

2. Device according to Claim 1, characterized in that each axially adjustable stop is formed by a bush (58) provided with a threaded bore which is mounted nonrotatably but displaceably in the part (32, 34) sealing off the cylinder space (42, 44) or in a plastic body (60, 62) connected to this part (32, 34), and in that a screw (64) engaging in the threaded bore of the bush (58) is provided for the axial adjustment of the bush, which screw for its part is held in an axially nondisplaceable manner on the part (32, 34) sealing off the cylinder space (42, 44).

3. Device according to Claim 2, characterized in that the screw (64) has an annular collar (70) provided with catch grooves on the circumference or is connected to such an annular collar, and in that a catch member (72), which is pressed against the annular collar (70) by a spring (74), is mounted with radial displaceability in the part (32, 34) sealing off the cylindrical space (42, 44) or in a plastic body (60, 62) connected to this part (32, 34).